# EUROPÄISCHE PATENTSCHRIFT

(11) **EP 3 800 005 B1**
(45) Veröffentlichungstag und Bekanntmachung des Hinweises auf die Patenterteilung: **20.09.2023**
(21) Anmeldenummer: 20020442.8
(22) Anmeldetag: 30.09.2020
(51) Int. Cl.: B23Q 7/00, B65G 51/02

(54) **VORRICHTUNG ZUR ABGABE VON KLEINEN WERKSTÜCKEN AN EINER WERKZEUGMASCHINE**
DEVICE FOR UNLOADING SMALL WORKPIECES FROM A MACHINE TOOL
DISPOSITIF DE DECHARGEMENT DE PETITES PIÈCES D'UNE MACHINE-OUTIL

(30) Priorität: 02.10.2019 DE 102019126735; 05.03.2020 DE 102020106042
(43) Veröffentlichungstag der Anmeldung: 07.04.2021
(73) Patentinhaber: Mecha AG, 3123 Belp (CH)
(72) Erfinder: Rohr, Lukas, 3125 Toffen (CH)
(74) Vertreter: Petersen, Frank

(56) Entgegenhaltungen:
- EP-A2- 1 518 639
- JP-A- S61 117 046

## Beschreibung

Die Erfindung betrifft eine Vorrichtung zur Entnahme von kleinen Werkstücken an einer Werkzeugmaschine, mit einem Zuführschlauch zum Leiten der kleinen Werkstücke zu einer Abgabeöffnung gemäß dem Oberbegriff des beigefügten Hauptanspruches.

Bei kleinen Werkstücken handelt es sich im vorliegenden Fall z.B. um kleine Drehteile wie Uhrenbauteile, medizinische Knochenschrauben etc.

Bei den Werkzeugmaschinen kann es sich dann beispielsweise um insbesondere automatisierte Drehmaschinen handeln, wobei es bekannt ist, deren Drehwerkzeug mittels Kühl-/Schmiermittel vor einem Verschleiß zu schützen. Als Kühl-/Schmiermittel werden Öle oder Emulsionen verwendet.

Am Ende des Herstellungsprozesses besteht die Gefahr, dass das kleine, fertig gedrehte Werkstück durch das Kühl-/Schmiermittel versehentlich fortgespült wird und dann in der Drehmaschine selbst oder bei einem Austrag über Förderbänder "verloren" geht. Problematisch dabei ist zum Beispiel, dass die kleinen Werkstücke aufgrund ihrer geringen Abmessungen und ihres niedrigen Gewichtes und wegen des sie benetzenden Kühl-/Schmiermittels an Maschinenteilen anhaften.

Um dies zu vermeiden, ist im Stand der Technik bekannt, Druckluft einzusetzen, mit der ein gefertigtes kleines Werkstück durch eine Düse, insbesondere eine Venturidüse gesaugt und anschließend mit der Abluft der Düse durch einen Zuführschlauch mit einer Abgabeöffnung an seinem Ende in einen Auffangbehälter geblasen wurde. Eine Vorrichtung dieser Art ist beispielsweise aus der EP 1 518 639 A2 bekannt.

Sowohl innerhalb der Düse als auch im Auffangbehälter besteht für die empfindlichen Werkstücke die Gefahr, dass sie aufgrund von Verwirbelungen, die durch die Druckluft bzw. Abluft der Düse erzeugt werden, beschädigt werden, indem sie aneinander oder an Wandungen anschlagen.

Weiterhin kann durch die Düse das Kühl-/Schmiermittel in ungewünschter Weise vernebelt werden, wodurch in der Umgebung der Produktion gegebenenfalls auch gesundheitsschädliche Ölnebel zu finden sind.

Bei einer Vorrichtung der oben genannten Art ist es bekannt, dass der Zuführschlauch mit einer mit Vakuum beaufschlagbaren Kammer in Verbindung ist.

Dies hat den Vorteil, dass die Werkstücke über das Vakuum einzeln angesaugt werden können und es so zu verhindern ist, dass die Werkstücke an anderen Werkstücken anhaften oder mit diesen kollidieren und beschädigt werden.

Insbesondere wird bei einer Weiterbildung der Erfindung vorgeschlagen, dass über ein in der Kammer vorhandenes Siebelement, das vor einem Anschluss zu einem Vakuumerzeuger angeordnet ist, ein in die Kammer gelangendes Werkstück betriebssicher aus dem Vakuumstrom entnommen wird. Das Werkstück ist somit vereinzelt und kann separat weiterbehandelt und/oder transportiert werden.

Aufgabe der vorliegenden Erfindung ist es, eine Vorrichtung der eingangs genannten Art derart weiterzubilden, dass die beschriebenen Nachteile vermieden werden. Dabei soll die entsprechende Vorrichtung betriebssicher und kostengünstig realisierbar sein.

Für einen Weitertransport oder eine Weiterbehandlung weist die Kammer erfindungsgemäß deshalb einen betätigbaren Verschluss zur Verbindung mit der Abgabeöffnung und eine Spülöffnung auf, über die sie mit einer Spüleinheit in Verbindung ist und über die Spülflüssigkeit in sie eingeführt werden kann, so dass die Spülflüssigkeit ein in der Kammer befindliches Werkstück durch die Abgabeöffnung aus dieser herausspült.

Über diese Spülöffnung ist sicherzustellen, dass das Werkstück besonders schonend aus der Kammer ausgetragen wird, wobei die Verwendung einer Spülflüssigkeit auch verhindert, dass das Werkstück aufgrund einer Benetzung mit Kühl-/Schmiermittel irgendwo haften bleibt.

Vorzugsweise sind die Spüleinheit und der Verschluss der Kammer mit einem gemeinsamen Betätigungselement gekoppelt, wodurch der apparative Aufwand zur Leerung der Kammer verringert werden kann: während der Verschluss der Kammer geöffnet wird, wird gleichzeitig die Spüleinheit durch das gemeinsame Betätigungselement aktiviert. Eine separate und aufwändige Steuerung für die Spüleinheit kann somit eingespart werden.

Insbesondere wird vorschlagen, dass das Betätigungselement den Verschluss der Kammer öffnet und gleichzeitig ein in der Spüleinheit mit Spülflüssigkeit gefülltes Volumen leert. Außerdem schließt das Betätigungselement den Verschluss wieder, wobei es gleichzeitig die Wiederbefüllung des in der Spüleinheit vorhandenen Volumens mit Spülflüssigkeit bewirkt. Damit kann die Vorrichtung in zeitsparender und betriebssicherer Weise für die nächste Aufnahme sowie Entnahme eines kleinen Werkstücks vorbereitet sein.

Weitere Vorteile und Merkmale der Erfindung ergeben sich aus der nachfolgenden Beschreibung eines Ausführungsbeispiels. Dabei zeigt
- Figur 1: eine Schnittansicht einer erfindungsgemäßen Vorrichtung in Aufnahmeposition für ein kleines Werkstück;
- Figur 2: eine Schnittansicht einer erfindungsgemäßen Vorrichtung in Entnahmeposition für ein kleines Werkstück.

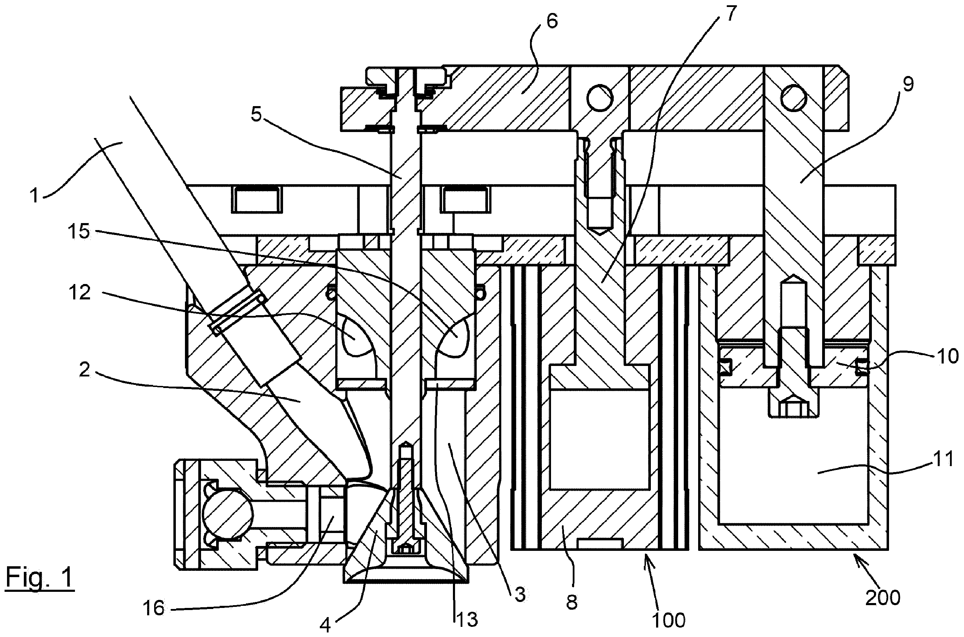

In der Figur 1 erkennt man eine erfindungsgemäße Vorrichtung zur Entnahme von kleinen Werkstücken aus einer Werkzeugmaschine in der Schnittansicht.

Man erkennt einen Zuführschlauch 1, der über eine Bohrung 2 in einer Kammer 3 endet. Die Kammer 3 weist an ihrem hier unten dargestellten Ende einen kegelförmigen Verschluss 4 auf, der über eine Stange 5 an einem quer liegenden Joch 6 hängt. Dieses Joch 6 kann über den Kolben 7 einer Zylindereinheit 8 angehoben oder abgesenkt werden.

Der Kolben 7, die Zylindereinheit 8 und das Joch 6 bilden ein Betätigungselement 100.

Der Verschluss 4 besteht vorzugsweise aus einem elastischen Material wie beispielsweise Silikon o.ä.

An dem genannten Joch 6 ist weiterhin eine Kolbenstange 9 befestigt, mit der ein Spülkolben 10 in einem Spülzylinder 11 verfahren werden kann. Der Spülzylinder 11 bildet dabei ein mit Spülflüssigkeit füllbares Volumen.

Die Kolbenstange 9, der Spülkolben 10 und der Spülzylinder 11 bilden zusammen eine Spüleinheit 200.

In dem in der Figur 1 dargestellten Zustand ist die Kammer 3 durch den Verschluss 4 geschlossen, der über die Stange 5 und das Joch 6 mittels des Kolbens 7 des Zylinders 8, also mittels des Betätigungselementes 100 angehoben ist.

In diesem Zustand wird über eine (hier nicht dargestellte) Leitung, die in einer Absaugöffnung 12 in der Kammer 3 endet, in der Kammer 3 ein Unterdruck bzw. Vakuum erzeugt.

Mithilfe dieses Unterdrucks bzw. Vakuums werden kleine Werkstücke, wie beispielsweise Uhrenteile oder medizinische Knochenschrauben mit sehr kleinen Abmessungen, am Ende ihres Herstellprozesses innerhalb einer Werkzeugmaschine wie beispielsweise einem Drehautomaten in den Zuführschlauch 1 angesaugt, sodass diese durch den Zuführschlauch 1 und die Bohrung 2 hindurch in der Kammer 3 landen.

Um zu verhindern, dass diese kleinen Werkstücke innerhalb der Kammer 3 in die Absaugöffnung 12 hineingesaugt werden, weist die Kammer 3 an ihrem hier oberen Ende ein Siebelement 13 auf. Durch dieses Siebelement 13 kann das kleine Werkstück nicht hindurchtreten und bleibt somit in der Kammer 3 liegen.

Als nächstes wird bei Zylindereinheit 8 der Kolben 7 gesteuert abgesenkt, wodurch sich auch das Joch 6 und damit die Stange 5 senken. Dabei gibt der Verschluss 4 eine am unteren Ende der Kammer 3 vorhandene Abgabeöffnung 14 frei.

Gleichzeitig wird durch das Absenken des Jochs 6 die Kolbenstange 9 nach unten bewegt und drückt damit in der Spüleinheit 200 den Spülkolben 10 nach unten, wodurch im Spülzylinder 11 befindliche Spülflüssigkeit über eine hier nicht dargestellte Leitung zu einer Spülöffnung 15 an der Wandung der Kammer 3 gepumpt wird.

Die damit in die Kammer 3 gedrückte Spülflüssigkeit spült ein in der Kammer 3 befindliches kleines Werkstück durch die Abgabeöffnung 14 aus dieser heraus, wobei ein Haftenbleiben des Werkstückes in der Kammer 3 durch die Spülflüssigkeit sicher verhindert wird. Dieses kleine Werkstück kann nach dem Ausspülen leicht und sicher aufgefangen werden.

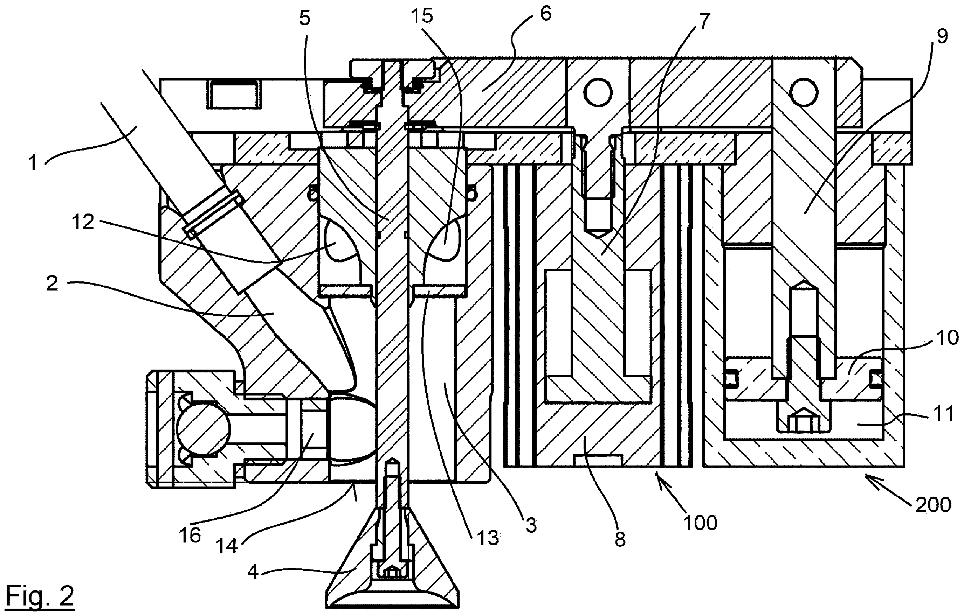

Nachdem das kleine Werkstück wie erläutert ausgespült wurde, wird als nächster Schritt die hier dargestellte Vorrichtung wieder aus dem Zustand, in dem sie in der Figur 2 dargestellt ist, zurück in den Zustand verbracht, in dem sie in der Figur 1 dargestellt ist.

Hierzu wird in der Zylindereinheit 8 der Kolben 7 wieder nach oben gefahren wodurch auch das Joch 6 mit angehoben wird und dabei über die Stange 5 den Verschluss 4 zurück in die Abgabeöffnung 14 führt, um so die Kammer 3 wieder zu verschließen.

Da der Verschluss 4 aus elastischem Material ist, wird sein Einführen in die Abgabeöffnung 14 gedämpft. Dies führt auch dazu, dass das Betätigungselement 100 gedämpft in seine Endposition fährt. Es sei noch erwähnt, dass das elastische Material des kegelstumpfförmigen Verschlusses 4 auch dazu führt, dass die in die Kammer 3 eingesaugten kleinen Werkstücke entsprechend gedämpft abgefangen werden können, wenn sie auf die Mantelfläche dieses Verschlusses treffen.

Gleichzeitig mit dem Verschließen der Abgabeöffnung 14 durch das Betätigungselement 100 wird auch bei der Spüleinheit 200 der Spülkolben 10 innerhalb des Spülzylinders 11 über die Kolbenstange 9 nach oben bewegt, wobei gleichzeitig Spülflüssigkeit in das durch den Spülzylinder 11 gebildete Volumen gesaugt wird, um dort für den nächsten Spülvorgang bereit zu sein.

Dann wird der nächste Zyklus mit Erzeugung eines Unterdrucks bzw. Vakuums in der Kammer 3 durchgeführt und das nächste kleine Werkstück wird aufgenommen und gezielt abgegeben.

Es sei noch erwähnt, dass am unteren Ende der Kammer 3 auch noch eine Überlauföffnung 16 vorgesehen ist, durch die es möglich ist, mit den kleinen Werkstücken durch den Zuführschlauch 1 mitangesaugtes Kühl-/Schmiermittel separat aus der Kammer 3 abzulassen. Damit kann ein ungewünschtes Ansteigen dieses Kühl-/Schmiermittels in der Kammer 3 verhindert werden, das zu einem Verschluss der Bohrung 2 und damit zu einer Unterbrechung des Absaugvorganges durch den Zuführschlauch 1 führen könnte.

Des Weiteren sei noch erwähnt, dass die Kammer 3 bedarfsweise auch an ihrem oberen Ende geöffnet werden kann, um bei einer Sichtkontrolle zu überprüfen, ob sich noch kleine Werkstücke in der Kammer 3 befinden. Dies ist insbesondere relevant bei Wechsel der mit einer Werkzeugmaschine gefertigten Werkstücke am Ende eines Fertigungsloses.

Das Öffnen der Kammer 3 an ihrem oberen Ende erfolgt insbesondere durch eine Entfernung des Jochs 6 und eine anschließende manuelle oder werkzeugunterstützte Entnahme des die Kammer 3 nach oben verschließenden Deckels.

Die erfindungsgemäße Vorrichtung hat damit den Vorteil, dass mit ihr eine betriebssichere, kompakte Einheit zur Verfügung gestellt werden kann, mit der kleine Werkstücke prozesssicher einzeln aufgenommen und abgegeben werden können, ohne die Gefahr zu laufen, dass sie in einer Werkzeugmaschine "verloren gehen" oder beschädigt werden.

### Bezugszeichenliste

- 1: Zuführschlauch
- 2: Bohrung
- 3: Kammer
- 4: Verschluss
- 5: Stange
- 6: Joch
- 7: Kolben
- 8: Hubzylindereinheit
- 9: Kolbenstange
- 10: Spülkolben
- 11: Spülzylinder
- 12: Absaugöffnung
- 13: Siebelement
- 14: Abgabeöffnung
- 15: Spülöffnung
- 16: Überlauföffnung
- 100: Betätigungselement
- 200: Spüleinheit

## Patentansprüche

1. Vorrichtung zur Entnahme von kleinen Werkstücken an einer Werkzeugmaschine, mit einem Zuführschlauch (1) zum Leiten der kleinen Werkstücke zu einer Abgabeöffnung (14), wobei
der Zuführschlauch (1) mit einer mit Vakuum beaufschlagbaren Kammer (3) in Verbindung ist,
**dadurch gekennzeichnet,**
**dass** die Kammer (3) einen betätigbaren Verschluss (4) für die Abgabeöffnung (14) und
eine Spülöffnung (15) aufweist, die mit einer Spüleinheit (200) in Verbindung ist, von der durch die Spülöffnung (15) in die Kammer (3) gedrückte Spülflüssigkeit ein in der Kammer (3) befindliches Werkstück durch die Abgabeöffnung (14) aus dieser herausspült.

2. Vorrichtung gemäß Anspruch 1,
**dadurch gekennzeichnet,**
**dass** die Spüleinheit (200) und der Verschluss (4) mit einem gemeinsamen Betätigungselement (100) gekoppelt sind.

3. Vorrichtung gemäß einem oder mehreren der vorherigen Ansprüche,
**dadurch gekennzeichnet,**
**dass** in der Kammer (3) ein Siebelement (13) vorhanden ist vor einer Absaugöffnung (12) zu einem Vakuumerzeuger.

4. Vorrichtung gemäß einem oder mehreren der vorherigen Ansprüche,
**dadurch gekennzeichnet,**
**dass** das Betätigungselement (100) den Verschluss (14) öffnet und in der Spüleinheit (200) ein mit Spülflüssigkeit gefülltes Volumen (11) leert sowie den Verschluss (14) schließt und das Volumen (11) mit Spülflüssigkeit füllt.

## Claims

1. Device for retrieving small workpieces on a machine tool, having an infeed hose (1) for directing the small workpieces to a dispensing opening (14), wherein the infeed hose (1) is connected to a chamber (3) which is able to be impinged with a vacuum,
**characterized in that**
the chamber (3) has an activatable closure (4) for the dispensing opening (14), and
a purging opening (15) which is connected to a purging unit (200) from which purging liquid forced through the purging opening (15) into the chamber (3) purges a workpiece located in the chamber (3) out of the latter by way of the dispensing opening (14).

2. Device according to Claim 1,
**characterized in that**
the purging unit (200) and the closure (4) are coupled to a common activating element (100).

3. Device according to one or a plurality of the preceding claims,
**characterized in that**
a screening element (13) is present in the chamber (3) so as to be in front of a suction opening (12) to a vacuum generator.

4. Device according to one or a plurality of the preceding claims,
**characterized in that**
the activating element (100) opens the closure (14) and in the purging unit (200) empties a volume (11) filled with purging liquid, and closes the closure (14) and fills the volume (11) with purging liquid.

## Revendications

1. Dispositif pour le déchargement de petites pièces sur une machine-outil, avec un tuyau d'amenée (1) pour guider les petites pièces vers une ouverture de distribution (14),
le tuyau d'amenée (1) étant en liaison avec une chambre (3) pouvant être alimentée en vide,
**caractérisé en ce que**
la chambre (3) présente une fermeture actionnable (4) pour l'ouverture de distribution (14) et
une ouverture de rinçage (15) qui est en liaison avec une unité de rinçage (200), à partir de laquelle une pièce se trouvant dans la chambre (3) est évacuée par rinçage de celle-ci par l'ouverture de distribution (14) par un liquide de rinçage injecté dans la chambre (3) par l'ouverture de rinçage (15).

2. Dispositif selon la revendication 1,
**caractérisé en ce que**
l'unité de rinçage (200) et la fermeture (4) sont couplées à un élément d'actionnement commun (100).

3. Dispositif selon une ou plusieurs des revendications précédentes,
**caractérisé en ce qu'**un
élément de tamisage (13) est présent dans la chambre (3) avant une ouverture d'aspiration (12) vers un générateur de vide.

4. Dispositif selon l'une ou plusieurs des revendications précédentes,
**caractérisé en ce que**
l'élément d'actionnement (100) ouvre la fermeture (14) et vide un volume (11) rempli de liquide de rinçage dans l'unité de rinçage (200), et ferme la fermeture (14) et remplit le volume (11) de liquide de rinçage.
